## Europäisches Patentamt
## European Patent Office
## Office européen des brevets

(19)

(11) Veröffentlichungsnummer: **0 069 906**
A2

(12) # EUROPÄISCHE PATENTANMELDUNG

(21) Anmeldenummer: 82105707.2

(22) Anmeldetag: 28.06.82

(51) Int. Cl.³: **A 01 N 25/06**

(30) Priorität: 09.07.81 DE 3127061

(43) Veröffentlichungstag der Anmeldung:
19.01.83 Patentblatt 83/3

(84) Benannte Vertragsstaaten:
AT BE CH DE FR GB IT LI LU NL SE

(71) Anmelder: BAYER AG
Zentralbereich Patente, Marken und Lizenzen
D-5090 Leverkusen 1, Bayerwerk(DE)

(72) Erfinder: Behrenz, Wolfgang, Dr.
Untergruendemich 14
D-5063 Overath(DE)

(72) Erfinder: Schütte, Manfred, Dr.
Am Theuspfad 76
D-5024 Pulheim 4(DE)

(54) Aerosol-Formulierungen auf Wasserbasis.

(57) Neue Aerosol-Formulierungen auf Wasserbasis, die aus
– 0,01 - 6 Gew.-% an mindestens einem insektizid und/oder akarizid wirksamen Stoff aus der Klasse der Carbamate, Pyrethroide, Essigsäureester-Derivate und/oder Phosphorsäureester-Derivate,
– 0,1 - 2 Gew.-% an mindestens einem Emulgator,
– 5 - 40 Gew.-% an mindestens einem organischen Lösungsmittel,
– 20 - 70 Gew.%- an Wasser,
– 10 - 50 Gew.-% an Treibmittel sowie
– gegebenenfalls 0,1 - 6 Gew.-% an Zusatzstoffen bestehen, wobei die Summe der Komponenten jeweils 100 Gew.-% beträgt.
Die erfindungsgemäßen Formulierungen lassen sich herstellen, indem man Wirkstoff(e), Emulgator, organische Lösungsmittel sowie gegebenenfalls Zusatzstoffe vermischt, das Gemisch mit Wasser versetzt und in einer Sprühdose Treibmittel hinzufügt.
Die erfindungsgemäßen Aerosol-Formulierungen lassen sich im Haushalts- und Hygienebereich bzw. in der Landwirtschaft und im Gartenbau verwenden.

EP 0 069 906 A2

Croydon Printing Company Ltd.

0069906

- 1 -

BAYER AKTIENGESELLSCHAFT        5090 Leverkusen, Bayerwerk

Zentralbereich
Patente, Marken und Lizenzen  Dü/Kü-c
                               V


Aerosol-Formulierungen auf Wasserbasis


Die vorliegende Erfindung betrifft neue Aerosolformulierungen auf Wasserbasis, ein Verfahren zu deren Herstellung und deren Verwendung im Haushalts- und Hygienebereich sowie im Pflanzenschutz.

Es ist bereits bekannt geworden, Wirkstoffe im Haushalts- und Hygienebereich sowie im Pflanzenschutz mit Hilfe von Sprühdosen zu applizieren, in denen die Wirkstoffe in den Aerosol-Formulierungen in organischen Solventien gelöst enthalten sind. Bei dieser Art der Ausbringung werden relativ große Mengen an organischen Lösungsmitteln versprüht, was einerseits kostspielig ist und andererseits auch aus Gründen des Umweltschutzes unerwünscht ist. Um diesen negativen Faktor soweit wie möglich zu beseitigen, wurden daher Aerosol-Formulierungen entwickelt, in denen ein Teil der organischen Solventien durch Wasser ersetzt ist. Ein entscheidender Nachteil der bisher bekannt gewordenen Aerosol-Formulierungen dieser Art ist jedoch, daß sie eine deutlich geringere Wirkung zeigen als die entsprechenden wasserfreien Aerosol-Formulierungen (vgl. Bundesgesundheitsblatt 24, Nr. 10. Seiten 163-165 (1981)).

Le A 21 105-Ausland

- 2 -

Es wurden jetzt neue Aerosol-Formulierungen auf Wasserbasis gefunden, die aus

- 0,01 - 6 Gew.-% an mindestens einem insektizid und/ oder akarizid wirksamen Stoff aus der Klasse der Carbamate, Pyrethroide, Essigsäureester-Derivate und/oder Phosphorsäureester-Derivate,

- 0,1 - 2 Gew.-% an mindestens einem Emulgator,

- 5 - 40 Gew.-% an mindestens einem organischen Lösungsmittel,

- 20 - 70 Gew.-% an Wasser,

- 10 - 50 Gew.-% an Treibmittel

sowie

- gegebenenfalls 0,1 - 6 Gew.-% an Zusatzstoffen

bestehen, wobei die Summe der Komponenten jeweils 100 Gew.-% beträgt.

Weiterhin wurde gefunden, daß sich die erfindungsgemäßen Aerosol-Formulierungen auf Wasserbasis dadurch herstellen lassen, daß man

eine Lösung aus

Le A 21 105

- 0,01 - 6 Gew.-% an mindestens einem insektizid
und/oder akarizid wirksamen Stoff aus der
Klasse der Carbamate, Pyrethroide, Essigsäure=
ester-Derivate und/oder Phosphorsäureester-
Derivate

- 0,1 - 2 Gew.-% an mindestens einem Emulgator,

- 5 - 40 Gew.-% an mindestens einem organischen
Lösungsmittel

sowie

- gegebenenfalls 0,1 - 6 Gew.-% an Zusatzstoffen

mit 20 - 70 Gew.-% Wasser vermischt

und das entstehende Gemisch in einer Sprühdose mit
10 - 50 Gew.-% an Treibmittel versetzt,

wobei die Summe der Komponenten jeweils 100 Gew.-%
beträgt.

Schließlich wurde gefunden, daß sich die erfindungsgemäßen Aerosol-Formulierungen auf Wasserbasis im Haushalts- und Hygienebereich bzw. in der Landwirtschaft
und im Gartenbau verwenden lassen.

Es ist als äußerst überraschend zu bezeichnen, daß
die erfindungsgemäßen Aerosol-Formulierungen auf Wasserbasis, die insektizid und/oder akarizid wirksame Stoffe
aus der Klasse der Carbamate, Pyrethroide, Essigsäureester-
Derivate und/oder Phosphorsäureester-Derivate enthalten,
eine bessere Wirkung

Le A 21 105

besitzen als die entsprechenden, vorbekannten wasserfreien Aerosol-Formulierungen. Eine derartige überlegene Wirkung konnte aufgrund des bekannten Standes der Technik nicht erwartet werden, denn nach der bisherigen Erfahrung entfalteten jeweils die wasserfreien Aerosol-Formulierungen eine bessere Aktivität als die analogen wasserhaltigen Aerosol-Formulierungen.

Die erfindungsgemäßen Aerosol-Formulierungen auf Wasserbasis zeichnen sich gegenüber den entsprechenden vorbekannten, wasserfreien Aerosol-Formulierungen jedoch nicht nur durch eine unerwartet höhere Wirkung aus, sondern auch dadurch, daß weniger organische Lösungsmittel benötigt werden. Dadurch lassen sich die erfindungsgemäßen Aerosol-Formulierungen auf Wasserbasis kostengünstiger herstellen als entsprechende wasserfreie Aerosol-Formulierungen. Außerdem wird im Falle der erfindungsgemäßen Aerosol-Formulierungen die Umweltbelastung durch organische Lösungsmittel herabgesetzt.

Die erfindungsgemäßen Aerosol-Formulierungen auf Wasserbasis enthalten mindestens einen insektizid und/oder akarizid wirksamen Stoff aus der Klasse der Carbamate, Pyrethroide, Essigsäureester-Derivate und/oder Phosphor= säureester-Derivate. Als Beispiele für derartige Wirkstoffe seien im einzelnen genannt:

2-Isopropoxy-phenyl-N-methylcarbamat
2,2,2-Trichlor-1-(3,4-dichlorphenyl)-ethylacetat
α-Cyano-m-phenoxybenzyl (1R, 3R)-3-(2,2-dibromvinyl)-
2,2-dimethylcyclopropan-1-carboxylat

Le A 21 105

Chrysanthemumsäure-(2,3,4,5-tetrahydrophthalimidomethyl-ester)

3-(2,2-Dichlorvinyl)-2,2-dimethyl-cyclopropan-carbon-säure-$\alpha$-cyano-3-phenoxy-4-fluorbenzylester

3-(2,2-Dichlorvinyl)-2,2-dimethyl-cyclopropan-carbonsäure-(pentafluorphenyl)-methylester

natürliches Pyrethrum

O,O-Diethyl-thionophosphoryl-$\alpha$-oximino-phenylessigsäure=nitril

O,O-Diethyl-thionophosphoryl-$\alpha$-oximino-(2-chlorphenyl)-essigsäurenitril

Als Emulgatoren, die in den erfindungsgemäßen Aerosol-Formulierungen enthalten sind, kommen vorzugsweise Poly-oxyethylensorbitan-fettsäureester und Sorbitan-fett-säureester in Betracht. Als Beispiele seien genannt: Polyoxyethylen-sorbitan-monolaurat, -monopalmitat, -monostearat und monooleat mit jeweils durchschnitt-lich 20 -CH$_2$-CH$_2$-O-Gruppen pro Molekül, ferner Sorbitan-monolaurat, -monopalmitat, -monostearat, -tristearat, -monooleat und -trioleat.

Die Emulgatoren können in den erfindungsgemäßen Aerosol-Formulierungen einzeln oder in Form von Gemischen enthalten sein.

Als organische Lösungsmittel, die in den erfindungsgemäßen Aerosol-Formulierungen enthalten sind, kommen vorzugsweise in Frage: gesättigte aliphatische Kohlenwasserstoffe mit einem Siedepunkt zwischen 150°C und 250°C, wie zum Beispiel Dodecan und desodorierte Kerosene, ferner niedrig siedende chlorierte aliphatische Kohlenwasserstoffe, wie Methylenchlorid, weiterhin Alkohole mit bis zu 3 Kohlenstoffatomen, wie Ethanol, n-Propanol und

Le A 21 105

Isopropanol, und außerdem niedrig siedende Ketone, wie Aceton und Methylethylketon.

Die organischen Solventien können einzeln oder in Form von Gemischen enthalten sein.

Als Wasser kommt im Falle der erfindungsgemäßen Aerosol-Formulierungen vorzugsweise destilliertes Wasser in Frage.

Als Treibmittel, die in den erfindungsgemäßen Aerosol-Formulierungen enthalten sind, kommen vorzugsweise Gemische aus Propan und Butan in Betracht.

Als Zusatzstoffe, die in den erfindungsgemäßen Aerosol-Formulierungen auf Wasserbasis enthalten sein können, kommen Synergisten, Duftstoffe und Stabilisatoren in Frage.

Als Beispiel für Synergisten sei Piperonylbutoxid genannt.

Als Duftstoffe kommen Parfümöle in Betracht. Speziell genannt sei der von der Firma Haarmann & Reimer GmbH, Holzminden, unter der Bezeichnung "Frischduft 760 712 H + R" erhältliche Duftstoff.

Als Beispiele für Stabilisatoren seien Natriumbenzoat und amphotere Tenside genannt.

Le A 21 105

In den erfindungsgemäßen Aerosol-Formulierungen auf Wasserbasis können die prozentualen Anteile der enthaltenen
Komponenten innerhalb bestimmter Bereiche variiert werden.
Der Anteil an Wirkstoff bzw. Wirkstoffen liegt im allgemeinen zwischen 0,01 und 6 Gew.-%, vorzugsweise zwischen
0,04 und 3 Gew.-%. Der Anteil an Emulgator beträgt im allgemeinen 0,1 bis 2 Gew.-%, vorzugsweise 0,2 bis 1,5 Gew.-%.
Organische Lösungsmittel sind im allgemeinen in Anteilen
zwischen 5 und 40 Gew.-%, vorzugsweise zwischen 6 und
35 Gew.-% vorhanden. Der Anteil an Treibmittel liegt im
allgemeinen zwischen 10 und 50 Gew.-%, vorzugsweise
zwischen 20 und 40 Gew.-%. Zusatzstoffe können in Anteilen
von 0,1 bis 6 Gew.-%, vorzugsweise 0,5 bis 5 Gew.-% enthalten sein.

Der prozentuale Anteil an Wasser in den erfindungsgemäßen Aerosol-Formulierungen errechnet sich jeweils als
Differenz aus 100 Gew.-% und der Summe der prozentualen
Anteile der übrigen Komponenten. Im allgemeinen sind
zwischen 20 und 70 Gew.-%, vorzugsweise zwischen 30 und
65 Gew.-% an Wasser enthalten.

Bei der Herstellung der erfindungsgemäßen Aerosol-
Formulierungen auf Wasserbasis nach dem erfindungsgemäßen Verfahren können alle diejenigen Komponenten
verwendet werden, die bereits im Zusammenhang mit der
Beschreibung der Aerosol-Formulierungen selbst genannt
wurden. Vorzugsweise in Betracht kommen diejenigen
Stoffe, die oben vorzugsweise oder beispielhaft aufgeführt wurden.

Le A 21 105

- 8 -

Die Reaktionstemperaturen können bei der Durchführung des erfindungsgemäßen Verfahrens in einem bestimmten Bereich variiert werden. Im allgemeinen arbeitet man bei Temperaturen zwischen 0°C und 50°C, vorzugsweise zwischen 10°C und 30°C.

Bei der Durchführung des erfindungsgemäßen Verfahrens geht man im allgemeinen so vor, daß man eine Lösung aus Wirkstoff bzw. Wirkstoffen, Emulgator und organischem Solvens sowie gegebenenfalls Zusatzstoffen in eine Sprühdose gibt, in der die gewünschte Menge an Wasser bereits enthalten ist, dann die Sprühdose mit einem Ventil verschließt und das Treibmittel nach üblichen Methoden zufügt. Die Reihenfolge, in der die Komponenten bei der Herstellung der organischen Phase zusammengegeben werden, ist variabel. Ebenso kann auch das Vermischen der organischen Phase mit dem Wasser und die Zugabe des Treibmittels in üblicher Weise variiert werden.

Die erfindungsgemäßen Aerosol-Formulierungen auf Wasserbasis können in der zubereiteten Form appliziert werden. Die Aufwandmenge richtet sich dabei nach der Konzentration, in der der Wirkstoff enthalten ist, und nach der jeweiligen Indikation.

Die Anwendung der erfindungsgemäßen Aerosol-Formulierungen auf Wasserbasis erfolgt nach üblichen Methoden. So kann man beispielsweise Pflanzen und/oder deren Lebensräume mit den Formulierungen besprühen. Weiterhin ist es

- 9 -

möglich, Flächen oder Gegenstände, auf denen die aktiven Komponenten ihre Wirkung entfalten sollen, mit den Formulierungen zu besprühen. Sollen die aktiven Komponenten in Räumen wirken, so werden die Formulierungen in diese Räume gesprüht.

Die Herstellung und die Verwendung der erfindungsgemäßen Aerosol-Formulierungen auf Wasserbasis geht aus den folgenden Beispielen hervor.

Le A 21 105

Herstellungsbeispiele

Beispiel 1

Zur Herstellung einer Aerosol-Formulierung auf Wasserbasis werden 40 g destilliertes Wasser in einer Sprühdose mit einem Brutto-Volumen von 120 ml vorgelegt und mit einer Lösung versetzt, die 2 g 2-Isopropoxy-phenyl-N-methylcarbamat, 0,2 g 2,2-Dimethyl-3-(2-methylpropenyl)-cyclopropancarbonsäure-3,4,5,6-tetrahydrophthalimido-methylester, 1 g Piperonylbutoxid, 1 g Sorbitan-monooleat, 0,2 g des von der Fa. Haarmann & Reimer GmbH, Holzminden, unter der Bezeichnung "Frischduft 760 712 H + R" erhältlichen Duftstoffes, 10 g Methylenchlorid und 15,6 g Isopropanol enthält. Danach wird die Sprühdose mit einem Ventil versehen und mit 30 g eines Treibgasgemisches gefüllt, das zu 15 Gew.-% aus Propan und zu 85 Gew.-% aus Butan besteht.

Nach der im Beispiel 1 angegebenen Methode werden auch die in den nachstehenden Beispielen aufgeführten Aerosol-Formulierungen hergestellt.

Beispiel 2

Aerosol-Formulierung der folgenden Zusammensetzung:

2    Gew.-%   2-Isopropoxy-phenyl-N-methyl-carbamat

0,2 Gew.-%   2,2-Dimethyl-3-(2-methylpropenyl)-cyclopropancarbonsäure-3,4,5,6-tetrahydro-phthalimidomethylester

Le A 21 105

1   Gew.-% Piperonylbutoxid

1   Gew.-% Sorbitan-monooleat

0,2 Gew-% "Frischduft 760 712 H + R" (vgl. Beispiel 1)

10   Gew.-% Methylenchlorid

20   Gew.-% Isopropanol

5   Gew.-% Dodecan

30,6 Gew.-% destilliertes Wasser

30   Gew.-% Propan/Butan = 15 : 85


Beispiel 3

Aerosol-Formulierung der folgenden Zusammensetzung:

2   Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydro-
      phthalimidomethylester

1   Gew.-% Piperonylbutoxid

1   Gew.-% Sorbitan-monooleat

0,2 Gew.-% "Frischduft 760 712 H + R" (vgl. Beispiel 1)

5   Gew.-% Methylenchlorid

20   Gew.-% Isopropanol

35,6 Gew.-% destilliertes Wasser

30   Gew.-% Propan/Butan = 15 : 85


Le A 21 105

- 12 -

Beispiel 4

Aerosol-Formulierung der folgenden Zusammensetzung:

2      Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydrophthal-
           imidomethylester

1      Gew.-% Piperonylbutoxid

1      Gew.-% eines Gemisches aus 9 Gewichtsteilen Sorbitan-monooleat und 1 Gewichtsteil Poly-
           oxyethylen-sorbitan-monooleat mit durch-
           schnittlich 20 -CH$_2$-CH$_2$-O-Gruppen pro
           Molekül

0,2 Gew.-% "Frischduft 760 712 H + R" (vgl. Beispiel 1)

10,6 Gew.-% Methylenchlorid

10      Gew.-% Isopropanol

5      Gew.-% Dodecan

40      Gew.-% destilliertes Wasser

30      Gew.-% Propan/Butan = 15 : 85

Beispiel 5

Aerosol-Formulierung der folgenden Zusammensetzung:

2      Gew.-% 2-Isopropoxy-phenyl-N-methyl-carbamat

Le A 21 105

0,2 Gew.-% 2,2-Dimethyl-3-(2-methylpropenyl)-cyclopropancarbonsäure-3,4,5,6-tetrahydro-
phthalimidomethylester

1    Gew.-% Piperonylbutoxid

1    Gew.-% Sorbitan-monooleat

0,2 Gew.-% "Frischduft 760 712 H + R" (vgl. Beispiel 1)

15,6 Gew.-% Isopropanol

10   Gew.-% Dodecan

40   Gew.-% destilliertes Wasser

30   Gew.-% Propan/Butan = 15:85

## Beispiel 6

Aerosol-Formulierung der folgenden Zusammensetzung:

2    Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydrophthal-
imidomethylester

1    Gew.-% Piperonylbutoxid

1    Gew.-% eines Gemisches aus 9 Gew.-Teilen Sorbitan-
monooleat und 1 Gew.-Teil Polyoxyethylen-
sorbitan-monooleat mit durchschnittlich
20 -CH$_2$-CH$_2$-O-Gruppen pro Molekül

0,2 Gew.-% "Frischduft 760 712 H + R" (vgl. Beispiel 1)

10   Gew.-% Methylenchlorid

15,6 Gew.-% Isopropanol

40   Gew.-% destilliertes Wasser

30   Gew.-% Propan/Butan = 25:75

Le A 21 105

- 14 -

Beispiel 7

Aerosol-Formulierung der folgenden Zusammensetzung:

2    Gew.-% 2-Isopropoxy-phenyl-N-methyl-carbamat
0,2  Gew.-% 2,2-Dimethyl-3-(2-methylpropenyl)-cyclopropancarbonsäure-3,4,5,6-tetrahydrophthal-
             imidomethylester
1    Gew.-% Piperonylbutoxid
1    Gew.-% eines Gemisches aus 9 Gew.-Teilen Sorbitan-
             monooleat und 1 Gew.-Teil Polyoxyethylen-
             sorbitan-monooleat mit durchschnittlich 20
             -$CH_2$-$CH_2$-O-Gruppen pro Molekül
0,2  Gew.-% "Frischduft 760 712 H + R" (vgl. Beispiel 1)
15,6 Gew.-% Isopropanol
10   Gew.-% Dodecan
40   Gew.-% destilliertes Wasser
30   Gew.-% Propan/Butan = 25:75

Beispiel 8

Aerosol-Formulierung der folgenden Zusammensetzung:

2    Gew.-% 2-Isopropoxy-phenyl-N-methyl-carbamat
0,2  Gew.-% 2,2-Dimethyl-3-(2-methylpropenyl)-cyclopropancarbonsäure-3,4,5,6-tetrahydrophthal-
             imidomethylester
1    Gew.-% Piperonylbutoxid

Le A 21 105

1 Gew.-% eines Gemisches aus 9 Gew.-Teilen Sorbitan-
monooleat und 1 Gew.-Teil Polyoxyethylen-
sorbitan-monooleat mit durchschnittlich 20
-CH$_2$-CH$_2$-O-Gruppen pro Molekül

0,2 Gew.-% "Frischduft 760 712 H + R" (vgl. Beispiel 1)

5 Gew.-% Methylenchlorid

20 Gew.-% Isopropanol

5 Gew.-% Dodecan

35,6 Gew.-% destilliertes Wasser

30 Gew.-% Propan/Butan = 25:75

## Beispiel 9

Aerosol-Formulierung der folgenden Zusammensetzung:

2 Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydrophthal-
imidomethylester

1 Gew.-% Piperonylbutoxid

1 Gew.-% eines Gemisches aus 9 Gew.-Teilen Sorbitan-
monooleat und 1 Gew.-Teil Polyoxyethylen-
sorbitan-monooleat mit durchschnittlich 20
-CH$_2$-CH$_2$-O-Gruppen pro Molekül

0,2 Gew.-% "Frischduft 760 712 H + R" (vgl. Beispiel 1)

12 Gew.-% Methylenchlorid

5 Gew.-% Dodecan

48,6 Gew.-% destilliertes Wasser

30 Gew.-% Propan/Butan = 25:75

Beispiel 10

Aerosol-Formulierung der folgenden Zusammensetzung:

2 Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydrophthal-imidomethylester

1 Gew.-% Piperonylbutoxid

1 Gew.-% eines Gemisches aus 9 Gew.-Teilen Sorbitan-monooleat und 1 Gew.-Teil Polyoxyethylen-sorbitan-monooleat mit durchschnittlich 20 $-CH_2-CH_2-O-$Gruppen pro Molekül

0,2 Gew.-% "Frischduft 760 712 H + R" (vgl. Beispiel 1)

5 Gew.-% Methylenchlorid

15 Gew.-% Isopropanol

5 Gew.-% Dodecan

40,6 Gew.-% destilliertes Wasser

30 Gew.-% Propan/Butan = 25:75

Beispiel 11

Aerosol-Formulierung der folgenden Zusammensetzung:

2 Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydro-phthalimidomethylester

1 Gew.-% Piperonylbutoxid

Le A 21 105

- 17 -

1 Gew.-% Sorbitan-monooleat

0,2 Gew.-% "Frischduft 760 712 H + R" (vgl. Beispiel 1)

15,6 Gew.-% Methylenchlorid

10 Gew.-% Dodecan

40 Gew.-% destilliertes Wasser

30 Gew.-% Propan/Butan = 15:85

Beispiel 12

Aerosol-Formulierung der folgenden Zusammensetzung:

2 Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydrophthal-imidomethylester

1 Gew.-% Piperonylbutoxid

1 Gew.-% Sorbitan-monooleat

0,2 Gew.-% "Frischduft 760 712 H + R" (vgl. Beispiel 1)

12 Gew.-% Methylenchlorid

5 Gew.-% Dodecan

48,6 Gew.-% destilliertes Wasser

30 Gew.-% Propan/Butan = 15:85

Beispiel 13

Aerosol-Formulierung der folgenden Zusammensetzung:

2 Gew.-% 2-Isopropoxy-phenyl-N-methyl-carbamat

0,2 Gew.-% 2,2-Dimethyl-3-(2-methylpropenyl)-cyclopropancarbonsäure-3,4,5,6-tetrahydro-phthalimidomethylester

Le A 21 105

1    Gew.-% Piperonylbutoxid

1    Gew.-% Sorbitan-monooleat

0,2 Gew.-% "Frischduft 760 712 H + R" (vgl. Beispiel 1)

5    Gew.-% Dodecan

16,5 Gew.-% Isopropanol

44,1 Gew.-% destilliertes Wasser

30   Gew.-% Propan/Butan = 15:85


**Beispiel 14**


Aerosol-Formulierung der folgenden Zusammensetzung:


0,04 Gew.-% 3-(2,2-Dichlorvinyl)-2,2-dimethylcyclo-propancarbonsäure-$\alpha$-cyano-3-phenoxy-4-fluorbenzylester

0,3  Gew.-% eines Gemisches aus 9 Gew.-Teilen Sorbitan-monooleat und 1 Gew.-Teil Polyoxyethylen-sorbitan-monooleat mit durchschnittlich 20 -$CH_2$-$CH_2$-O-Gruppen pro Molekül

3    Gew.-% Dodecan

3,5  Gew.-% Aceton

63,16 Gew.-% destilliertes Wasser

30   Gew.-% Propan/Butan = 15:85


**Beispiel 15**


Aerosol-Formulierung der folgenden Zusammensetzung:


0,04 Gew.-% 3-(2,2-Dichlorvinyl)-2,2-dimethylcyclo-propancarbonsäure-$\alpha$-cyano-3-phenoxy-4-fluorbenzylester


Le A 21 105

0,2   Gew.-% Piperonylbutoxid

0,3   Gew.-% eines Gemisches aus 9 Gew.-Teilen Sorbitan-
         monooleat und 1 Gew.-Teil Polyoxyethylen-
         sorbitan-monooleat mit durchschnittlich 20
         -$CH_2$-$CH_2$-O-Gruppen pro Molekül

3     Gew.-% Dodecan

3,5   Gew.-% Aceton

62,96 Gew.-% destilliertes Wasser

30    Gew.-% Propan/Butan = 25:75

Beispiel 16

Aerosol-Formulierung der folgenden Zusammensetzung:

0,04  Gew.-% 3-(2,2-Dichlorvinyl)-2,2-dimethylcyclo-
         propancarbonsäure-(pentafluorphenyl)-
         methyl-ester

0,025 Gew.-% 3-(2,2-Dichlorvinyl)-2,2-dimethylcyclo-
         propancarbonsäure-$\alpha$-cyano-3-phenoxy-4-
         fluorbenzylester

0,2   Gew.-% Piperonylbutoxid

0,3   Gew.-% eines Gemisches aus 9 Gew.-Teilen Sorbitan-
         monooleat und 1 Gew.-Teil Polyoxyethylen-
         sorbitan-monooleat mit durchschnittlich
         20 -$CH_2$-$CH_2$-O-Gruppen pro Molekül

3     Gew.-% Dodecan

3,5   Gew.-% Aceton

62,935 Gew.-% destilliertes Wasser

30    Gew.-% Propan/Butan = 25:75

Le A 21 105

- 20 -

Beispiel 17

Aerosol-Formulierung der folgenden Zusammensetzung:

0,04 Gew.-% 3-(2,2-Dichlorvinyl)-2,2-dimethylcyclo-
propancarbonsäure-(pentafluorphenyl)-
methyl-ester

0,3 Gew.-% eines Gemisches aus 9 Gew.-Teilen Sorbitan-
monooleat und 1 Gew.-Teil Polyoxyethylen-
sorbitan-monooleat mit durchschnittlich 20
-CH$_2$-CH$_2$-O-Gruppen pro Molekül

3 Gew.-% Dodecan

3,5 Gew.-% Aceton

63,16 Gew.-% destilliertes Wasser

30 Gew.-% Propan/Butan = 25:75

Beispiel 18

Aerosol-Formulierung der folgenden Zusammensetzung:

2 Gew.-% 2,2,2-Trichlor-1-(3,4-dichlorphenyl)-
ethylacetat

0,2 Gew.-% 2,2-Dimethyl-3-(2-methylpropenyl)-cyclopropancarbonsäure-3,4,5,6-tetrahydro-
phthalimidomethylester

1 Gew.-% Piperonylbutoxid

0,75 Gew.-% Sorbitan-monooleat

15 Gew.-% Dodecan

5 Gew.-% Isopropanol

46,05 Gew.-% destilliertes Wasser

30 Gew.-% Propan/Butan = 25:75

Le A 21 105

Beispiel 19

Aerosol-Formulierung der folgenden Zusammensetzung:

2     Gew.-% 2,2,2-Trichlor-1-(3,4-dichlorphenyl)-ethylacetat
0,2   Gew.-% 2,2-Dimethyl-3-(2-methylpropenyl)-cyclopropancarbonsäure-3,4,5,6-tetrahydrophthal-
            imidomethylester
1     Gew.-% Piperonylbutoxid
0,75  Gew.-% Sorbitan-monooleat
20    Gew.-% Dodecan
46,05 Gew.-% destilliertes Wasser
30    Gew.-% Propan/Butan = 25:75

Beispiel 20

Aerosol-Formulierung der folgenden Zusammensetzung:

2     Gew.-% 2,2,2-Trichlor-1-(3,4-dichlorphenyl)-
            ethylacetat
0,2   Gew.-% 2,2-Dimethyl-3-(2-methylpropenyl)-cyclopropancarbonsäure-3,4,5,6-tetrahydro-
            phthalimidomethylester
1     Gew.-% Piperonylbutoxid
0,75  Gew.-% Sorbitan-monooleat
10    Gew.-% Dodecan
10    Gew.-% Isopropanol
46,05 Gew.-% destilliertes Wasser
30    Gew.-% Propan/Butan = 25:75

Le A 21 105

- 22 -

Beispiel 21

Aerosol-Formulierung der folgenden Zusammensetzung:

1,00 Gew.-% O,O-Diethyl-thionophosphoryl-$\alpha$-oximino-
phenylessigsäurenitril

0,20 Gew.-% natürliches Pyrethrum

1,00 Gew.-% Piperonylbutoxid

0,40 Gew.-% eines Gemisches aus 9 Gew.-Teilen Sorbitanmonooleat und 1 Gew.-Teil Polyoxyethylensorbitanmono=
oleat mit durchschnittlich
20 $CH_2$-$CH_2$-O-Gruppen pro
Molekül

3,50 Gew.-% Aceton

3,60 Gew.-% Dodecan

60,30 Gew.-% destilliertes Wasser

30,00 Gew.-% Propan/Butan = 25 : 75

Beispiel 22

Aerosol-Formulierung der folgenden Zusammensetzung:

1,00 Gew.-% O,O-Diethyl-thionophosphoryl-$\alpha$-oximino-
(2-chlorphenyl)-essigsäurenitril

0,20 Gew.-% natürliches Pyrethrum

1,00 Gew.-% Piperonylbutoxid

0,40 Gew.-% eines Gemisches aus 9 Gew.-Teilen Sorbitanmonooleat und 1 Gew.-Teil Polyoxyethylensorbitanmono=
oleat mit durchschnittlich
20 $CH_2$-$CH_2$-O-Gruppen pro
Molekül

Le A 21 105

3,50 Gew.-% Aceton

3,60 Gew.-% Dodecan

60,30 Gew.-% destilliertes Wasser

30,00 Gew.-% Propan/Butan = 25 : 75


Beispiel 23

Aerosol-Formulierung der folgenden Zusammensetzung:

2,00 Gew.-% 2-Isopropoxy-phenyl-N-methylcarbamat

0,04 Gew.-% 3-(2,2-Dichlorvinyl)-2,2-dimethylcyclopropan-
carbonsäure-α-cyano-3-phenoxy-4-fluorbenzyl=
ester

0,20 Gew.-% Piperonylbutoxid

1,00 Gew.-% Sorbitan-monooleat

0,20 Gew.-% Frischduft 760 712 H + R (vgl. Beispiel 1)

10,00 Gew.-% Methylenchlorid

20,00 Gew.-% Isopropanol

5,00 Gew.-% Dodecan

30,60 Gew.-% destilliertes Wasser

30,00 Gew.-% Propan/Butan = 15 : 85


Beispiel 24·

Aerosol-Formulierung der folgenden Zusammensetzung:

2,00 Gew.-% 2-Isopropoxy-phenyl-N-methylcarbamat

0,04 Gew.-% 3-(2,2-Dichlorvinyl)-2,2-dimethyl-cyclo=
propancarbonsäure-(pentafluorphenyl)-
methylester

0,20 Gew.-% Piperonylbutoxid

1,00 Gew.-% Sorbitan-monooleat


Le A 21 105

- 24 -

0,20 Gew.-% Frischduft 760 712 H + R (vgl. Beispiel 1)

10,00 Gew.-% Methylenchlorid

20,00 Gew.-% Isopropanol

5,00 Gew.-% Dodecan

30,60 Gew.-% destilliertes Wasser

30,00 Gew.-% Propan/Butan = 15 : 85

Beispiel 25

Aerosol-Formulierung der folgenden Zusammensetzung:

2,00 Gew.-% 2,2,2-Trichlor-1-(3,4-dichlorphenyl)-
ethylacetat

0,04 Gew.-% 3-(2,2-Dichlorvinyl)-2,2-dimethylcyclo=
propancarbonsäure-(pentafluorphenyl)-
methylester

0,75 Gew.-% Sorbitanmonooleat

15,00 Gew.-% Dodecan

5,00 Gew.-% Isopropanol

47,21 Gew.-% destilliertes Wasser

30,00 Gew.-% Propan/Butan = 25 : 75

Le A 21 105

Vergleichsbeispiele

Beispiel I

Aerosol-Formulierung der folgenden Zusammensetzung:

0,04 Gew.-% 3-(2,2-Dichlorvinyl)-2,2-dimethyl-cyclopropancarbonsäure-α-cyano-3-phenoxy-4-
            fluorbenzylester
5    Gew.-% Methylenchlorid
10   Gew.-% Dodecan
0,01 Gew.-% "Frischduft 760 712 H + R" (vgl. Beispiel 1)
84,95 Gew.-% Propan/Butan = 15:85

Beispiel II

Aerosol-Formulierung der folgenden Zusammensetzung:

2    Gew.-% 2-Isopropoxy-phenyl-N-methyl-carbamat
0,2  Gew.-% 2,2-Dimethyl-3-(2-methylpropenyl)-cyclopropancarbonsäure-3,4,5,6-tetrahydro-
            phthalimidomethylester
1    Gew.-% Piperonylbutoxid
11,8 Gew.-% Dodecan
25   Gew.-% Methylenchlorid
60   Gew.-% Propan/Butan = 15:85

Beispiel III

Aerosol-Formulierung der folgenden Zusammensetzung:

Le A 21 105

0,04 Gew.-% 3-(2,2-Dichlorvinyl)-2,2-dimethyl-cyclo-
propancarbonsäure-$\alpha$-cyano-3-phenoxy-4-
fluorbenzylester

0,2 Gew.-% Piperonylbutoxid

5 Gew.-% Methylenchlorid

9,76 Gew.-% Dodecan

85 Gew.-% Propan/Butan 15:85

Beispiel IV

Aerosol-Formulierung der folgenden Zusammensetzung:

0,04 Gew.-% 3-(2,2-Dichlorvinyl)-2,2-dimethyl-cyclopropancarbonsäure-(pentafluormethyl)-
methyl-ester

0,025 Gew.-% 3-(2,2-Dichlorvinyl)-2,2-dimethyl-cyclo-
propancarbonsäure-$\alpha$-cyano-3-phenoxy-4-
fluorbenzylester

0,2 Gew.-% Piperonylbutoxid

9,735 Gew.-% Dodecan

85 Gew.-% Propan/Butan = 15:85

Beispiel V

Aerosol-Formulierung der folgenden Zusammensetzung:

0,04 Gew.-% 3-(2,2-Dichlorvinyl)-2,2-dimethyl-cyclopropancarbonsäure-(pentafluorphenyl)-
methyl-ester

5 Gew.-% Methylenchlorid

9,96 Gew.-% Dodecan

85 Gew.-% Propan/Butan = 15:85

Le A 21 105

- 27 -

**Beispiel VI**

Aerosol-Formulierung der folgenden Zusammensetzung:

2 Gew.-% 2,2,2-Trichlor-1-(3,4-dichlorphenyl)-ethylacetat

0,2 Gew.-% 2,2-Dimethyl-3-(2-methylpropenyl)-cyclopropancarbonsäure-3,4,5,6-tetrahydrophthalimidomethylester

1 Gew.-% Piperonylbutoxid

0,01 Gew.-% "Frischduft 760 712 H + R" (vgl. Beispiel 1)

10 Gew.-% Methylenchlorid

15 Gew.-% Dodecan

71,79 Gew.-% Propan/Butan 15:85


**Beispiel VII**

Aerosol-Formulierung der folgenden Zusammensetzung:

1,00 Gew.-% O,O-Diethyl-thionophosphoryl-$\alpha$-oximino-phenylessigsäurenitril

0,20 Gew.-% natürliches Pyrethrum

1,00 Gew.-% Piperonylbutoxid

18,00 Gew.-% Isopropanol

12,00 Gew.-% Dodecan

67,80 Gew.-% Propan/Butan = 15 : 85


Le A 21 105

- 28 -

Verwendungsbeispiele

Beispiel A

Aerosoltest

Testtiere:     Musca domestica ♂ ♂ (resistent)

In zwei gleichen Räumen A und B von je 30 m³ Inhalt werden von der Decke herab 3 Drahtkäfige gehängt und in jeden Drahtkäfig je 20 3 - 4 Tage alte Fliegen der Art Musca domestica gebracht, so daß sich in jedem Raum 60 Fliegen befinden.

Die Raumtemperatur beträgt in beiden Räumen 22°C. Durch eine Klappe in den Türen zu beiden Räumen werden nun in dem Raum A 16,9 g der Formulierung gemäß Beispiel 14 und in dem Raum B 16,9 g der Formulierung gemäß Beispiel I versprüht. Danach wird der Zustand der Testtiere von außen durch ein Glasfenster ständig kontrolliert und die Zeiten (Minuten) ermittelt, in denen 50 % (K.d.50) beziehungsweise 100 % (K.d.100) der Fliegen in Rückenlage (knock down) gefallen sind.

Die ermittelten Werte gehen aus der nachstehenden Tabelle hervor.

Le A 21 105

Tabelle A

Aerosoltest

Musca domestica ♂ ♂ (resistent)

| Formulierung gemäß Beispiel | K.d. 50 (Minuten) | K.d. 100 (Minuten) |
|---|---|---|
| I (bekannt) | 26 | 33 |
| 14 (erfindunsgemäß) | 15 | 22 |

Le A 21 105

Beispiel B

Aerosoltest

Testtiere:     Musca domestica ♂♂ (resistent)

In drei gleichen Räumen A, B und C von je 30 m³ Inhalt werden vor jedem Versuch von der Decke herab je 3 Drahtkäfige gehängt. In jedem Drahtkäfig befinden sich je 20 Fliegen von 3 - 4 Tagen Alter. Die Temperatur in den Räumen beträgt 22°C. Nacheinander werden pro Raum 16,9 g Doseninhalt aus Sprühdosen durch eine Klappe in der Tür in die Räume gesprüht. Durch ein Fenster in der Tür wird der Zustand der Testtiere laufend kontrolliert und die Zeiten (Minuten) ermittelt, in denen 50 % (K.d. 50) und in denen 100 % (K.d. 100) der Fliegen in Rückenlage (knock down) gefallen sind. Auf diese Weise werden mehrere Sprühdosenformulierungen hintereinander geprüft. Zwischen den einzelnen Tests werden die Räume gründlich gelüftet bis sie wieder insektizidfrei sind.

Die verwendeten Formulierungen und die ermittelten Werte gehen aus den nachfolgenden Tabellen hervor.

Le A 21 105

Tabelle B-1

Aerosoltest

Musca domestica ♂ ♂ (resistent)

| Formulierung gemäß Beispiel | K.d. 50 (Minuten) | K.d. 100 (Minuten) |
|---|---|---|
| bekannt: | | |
| II | 21 | 34 |
| erfindungsgemäß: | | |
| 13 | 17 | 22 |
| 12 | 15 | 20 |
| 11 | 15 | 22 |
| 10 | 13 | 18 |
| 9 | 17 | 24 |
| 8 | 15 | 23 |
| 7 | 18 | 25 |
| 6 | 13 | 17 |
| 4 | 16 | 23 |
| 3 | 9 | 11 |
| 2 | 8 | 10 |
| 5 | 14 | 18 |
| 1 | 6 | 10 |

Tabelle B-2

Aerosoltest

Musca domestica ♂ ♂ (resistent)

| Formulierung gemäß Beispiel | K.d. 50 (Minuten) | K.d. 100 (Minuten) |
|---|---|---|
| bekannt: | | |
| III | 22 | 27 |
| erfindungsgemäß: | | |
| 15 | 13 | 16 |

Le A 21 105

Tabelle B-3

Aerosoltest

Musca domestica ♂ ♂ (resistent)

| Formulierung gemäß Beispiel | K.d. 50 (Minuten) | K.d. 100 (Minuten) |
|---|---|---|
| bekannt: | | |
| IV | 12 | 15 |
| | | |
| erfindungsgemäß: | | |
| 16 | 9 | 11 |

Le A 21 105

- 34 -

Tabelle B-4

Aerosoltest

Musca domestica ♂ ♂ (resistent)

| Formulierung gemäß Beispiel | K.d. 50 (Minuten) | K.d. 100 (Minuten) |
|---|---|---|
| bekannt: | | |
| V | 12 | 15 |
| erfindungsgemäß: | | |
| 17 | 10 | 14 |

Tabelle B-5

Aerosoltest

Musca domestica ♂♂ (resistent)

| Formulierung<br>gemäß Beispiel | K.d. 50<br>(Minuten) | K.d. 100<br>(Minuten) |
|---|---|---|
| bekannt: | | |
| VI | 16 | 21 |
| | | |
| erfindungsgemäß: | | |
| 18 | 14 | 20 |
| 19 | 13 | 19 |
| 20 | 13 | 20 |

Tabelle B-6

Aerosoltest

Musca domestica ♂ ♂ (resistent)

| Formulierung gemäß Beispiel | K. d. 50 (Minuten) | K. d. 100 (Minuten) |
|---|---|---|
| bekannt: | | |
| VII | 26 | > 60 |
| erfindungsgemäß: | | |
| 21 | 18 | 33 |

Patentansprüche

1.  Aerosol-Formulierungen auf Wasserbasis, dadurch gekennzeichnet, daß sie aus

    - 0,01 - 6  Gew.-% an mindestens einem insektizid und/oder akarizid wirksamen Stoff aus der Klasse der Carbamate, Pyrethroide, Essigsäureester-Derivate und/oder Phosphorsäure=ester-Derivate,

    - 0,1  - 40 Gew.-% an mindestens einem Emulgator,

    -   ,5 - 40 Gew.-% an mindestens einem organischen Lösungsmittel;

    - 20   - 70 Gew.-% an Wasser,

    - 10   - 50 Gew.-% an Treibmittel

           sowie

    - gegebenenfalls 0,1 - 6 Gew.-% an Zusatzstoffen

    bestehen, wobei die Summe der Komponenten jeweils 100 Gew.-% beträgt.

2.  Aerosol-Formulierungen gemäß Anspruch 1, dadurch gekennzeichnet, daß sie als insektizid und/oder akarizid wirksamen Stoff 2-Isopropoxy-phenyl-N-methylcarbamat enthalten.

Le A 21 105

3. Aerosol-Formulierungen gemäß Anspruch 1, dadurch gekennzeichnet, daß sie als Wirkstoff 2,2,2-Tri= chlor-1-(3,4-dichlorphenyl)-ethylacetat enthalten.

4. Aerosol-Formulierungen gemäß Anspruch 1, dadurch gekennzeichnet, daß sie als Wirkstoff 2,2-Dimethyl-3-(2-methylpropenyl)-cyclopropancarbonsäure-3,4,5,6-tetrahydrophthalimido-methylester enthalten.

5. Aerosol-Formulierungen gemäß Anspruch 1, dadurch gekennzeichnet, daß sie als Wirkstoff 3-(2,2-Di= chlorvinyl)-2,2-dimethyl-cyclopropancarbonsäure-$\alpha$-cyano-3-phenoxy-4-fluorbenzylester enthalten.

6. Aerosol-Formulierungen gemäß Anspruch 1, dadurch gekennzeichnet, daß sie als Wirkstoff 3-(2,2-Di= chlorvinyl)-2,2-dimethyl-cyclopropancarbonsäure-(pentafluorphenyl)-methylester enthalten.

7. Aerosol-Formulierungen gemäß Anspruch 1, dadurch gekennzeichnet, daß sie als Wirkstoff O,O-Diethyl-thionophosphoryl-$\alpha$-oximino-phenylessigsäurenitril enthalten.

8. Aerosol-Formulierungen gemäß Anspruch 1, dadurch gekennzeichnet, daß sie als Wirkstoff O,O-Diethyl-thionophosphoryl-$\alpha$-oximino-(2-chlorphenyl)-essig= säurenitril enthalten.

9. Verfahren zur Herstellung von Aerosol-Formulierungen auf Wasserbasis, dadurch gekennzeichnet, daß man eine Lösung aus

- 0,01 - 6 Gew.-% an mindestens einem insektizid und/oder akarizid wirksamen Stoff aus der Klasse der Carbamate, Pyrethroide, Essig=säureester-Derivate und/oder Phosphor=säureester-Derivate,

- 0,1 - 2 Gew.-% an mindestens einem Emulgator,

- 5 - 40 Gew.-% an mindestens einem organischen Lösungsmittel

sowie

- gegebenenfalls 0,1 - 6 Gew.-% an Zusatzstoffen

mit 20-70 Gew.-% Wasser vermischt

und das entstandene Gemisch in einer Sprühdose mit 10-50 Gew.-% an Treibmittel versetzt,

wobei die Summe der Komponenten jeweils 100 Gew.-% beträgt.

10. Verwendung von Aerosol-Formulierungen gemäß Anspruch 1 im Haushalts- und Hygienebereich bzw. in der Landwirtschaft und im Gartenbau.

Le A 21 105